(19) Europäisches Patentamt
European Patent Office
Office européen des brevets

(11) **EP 1 811 361 A2**

## (12) EUROPEAN PATENT APPLICATION

(43) Date of publication:
**25.07.2007 Bulletin 2007/30**

(51) Int Cl.:
***G06F 3/033*** (2006.01)

(21) Application number: **06077286.0**

(22) Date of filing: **21.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **28.12.2005 KR 20050132051**

(71) Applicant: **Samsung Electronics Co., Ltd.**
**Yeongtong-gu**
**Suwon-si, Gyeonggi-do (KR)**

(72) Inventors:
- **Sohn, Jun-il, c/o Samsung Advanced Inst. of Tech.**
  **Yongin-si, Gyeonggi-do (KR)**
- **Kim, Dong-yoon,**
  **101-501, Jinheung Apt.,**
  **Seodaemun-gu, Seoul (KR)**
- **Bang, Won-chul**
  **Gyeonggi-do (KR)**
- **Choi, Eun-seok,**
  **102-302, Hogye Hyundai Apt.,**
  **Anyang-si, Gyeonggi-do (KR)**
- **Cho, Sung-Jung,**
  **Samsung Institute of Technology,Mt 14-1**
  **Yongin-si, Gyeonggi-do (KR)**

(74) Representative: **D'Halleweyn, Nele Veerle Trees**
**Gertrudis et al**
**Arnold & Siedsma**
**Sweelinckplein 1**
**2517 GK Den Haag (NL)**

(54) **Method, apparatus, and medium for suspending repeated signal input using slope variation in tilting interface**

(57) A method, apparatus, and medium for suspending repeated signal input using a slope variation in a tilting interface are provided. In the method of suspending a repeated signal input using a slope variation of a hand-held device in implementing a tilting interface of controlling a predetermined signal based on tilting of the hand-held device, the method includes measuring a slope of the hand-held device, calculating a slope difference between the measured slope and the previous slope, modifying the value of a determining factor that is used to determine whether to generate or to input the predetermined signal, according to changes in the measured slope and the calculated slope difference, and generating or inputting the predetermined signal or suspending the generating the predetermined signal based on the modified value of the determining factor.

**FIG. 2**

SIDE VIEW WHEN BEING TILTED FORWARD

**Description**

CROSS-REFERENCE TO RELATED APPLICATIONS

This application claims the benefit of Korean Patent Application No. 10-2005-0132051 filed on December 28, 2005 in the Korean Intellectual Property Office, the disclosure of which is incorporated herein by reference in its entirety.

BACKGROUND OF THE INVENTION

1. Field of the Invention

The present invention relates to a tilting interface, and more particularly, to a method apparatus, and medium for suspending repeated signal input using a slope variation in a tilting interface.

2. Description of the Related Art

Conventionally, buttons have been mainly used to input information to hand-held devices such as Personal Digital Assistants (PDAs), cellular phones, and MP3 players. In this case, a user has to repeatedly press a button to select the desired function. Research has been recently conducted into a tilt-based interface that allows hand-held devices such as cellular phones, PDAs or MP3 players to perform predetermined operations by tilting or shaking them.

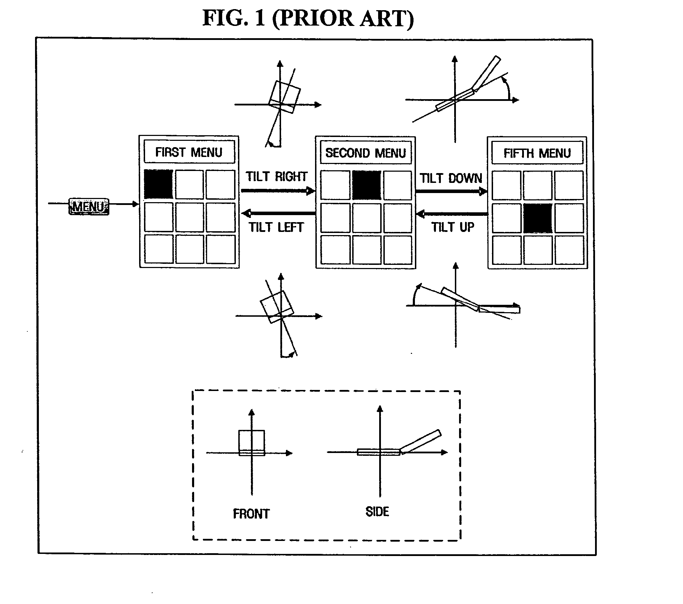

FIG 1 illustrates conventional tilting menu navigation. Referring to FIG. 1, three axes, inclusive of one overlap axis, are needed to measure top-to-bottom and side-to-side tilting of a mobile phone. Individual items in a 3×3 block menu can be selected by tilting the mobile phone from left to right and/or up and down. As a main example, this tilting technique may use a tilt sensor to allow a user to play games or navigate through menu items by tilting his or her wrists.
When tilting is used to implement an interface, menus should be able to move fast to increase convenience. When menus are selected by a user at high speed, errors may occur. For example, when a user navigates through menus by tilting a mobile phone to reach a desired menu, the mobile phone should be returned to its equilibrium position (or to a predetermined angle). When a hand-held device is sensitive to tilting and a user quickly navigates through the menus, an unwanted menu movement may occur while the device returns to the initial state, so that a user fails to stop on the desired menu. In this case, the user cannot obtain the desired input due to a delay in the users reaction from when the user sees the menu movement to when the user manipulates the device in response thereto and an error in the user's manipulation. Thus, there is a need for a method and apparatus for providing a tilting interface reducing an error in a user's manipulation and reducing time lag.

SUMMARY OF THE INVENTION

Additional aspects, features, and/or advantages of the invention will be set forth in part in the description which follows and, in part, will be apparent from the description, or may be learned by practice of the invention.
The present invention provides a method, apparatus, and medium for precisely suspending a repeated signal input when a predetermined input signal is generated by tilting a hand-held device.
The present invention also provides an improved tilting interface, in which generation and suspension of an input signal is not affected by errors in user's manipulation.
According to an aspect of the present invention, there is provided a method for suspending repeated signal input using a slope variation in a tilting interface that is used to control a predetermined signal by tilting a hand-held device, the method including measuring the slope of the hand-held device, calculating a slope difference between the measured slope and the previous slope, modifying the value of a determining factor that is used to determine whether to generate or input the predetermined signal according to changes in the measured slope and the slope difference, and generating or inputting the predetermined signal or suspending the generation of the predetermined signal based on the modified value of determining factor.
According to another aspect of the present invention, there is provided a hand-held device using a tilting interface to input a predetermined signal through tilting, the hand-held device including a slope measuring unit measuring the slope of the hand-held device, a determining factor controller calculating a difference between the measured slope and the previous slope and modifying the value of a determining factor that is used to determine whether to generate or input the predetermined signal according to changes in the measured slope and the slope difference, and a signal controller generating or inputting the predetermined signal or suspending the generation of the predetermined signal based on the modified value of determining factor.
According to another aspect of the present invention, there is provided at least one computer readable medium storing instructions that control at least one processor to perform a method of suspending a repeated signal input using a slope variation of a hand-held device and of controlling a predetermined signal based on tilting of the hand-held device to implement a tilting interface, the method including measuring a slope of the hand-held device; calculating a slope difference between the measured slope and previous slope; modifying the value of a determining factor that is used to determine whether to generate or input the predetermined signal, according to changes in the measured slope and the calculated slope difference; and generating or inputting the predetermined signal or suspending the generating of the predetermined signal based on the modified value of the determining factor

BRIEF DESCRIPTION OF THE DRAWINGS

These and/or other aspects, features, and advantages of the invention will become apparent and more readily appreciated from the following description of the embodiments, taken in conjunction with the accompanying drawings of which:

FIG. 1 illustrates conventional tilting menu navigation;
FIG 2 illustrates the movement of menus in response to tilting, according to an exemplary embodiment of the present invention;
FIG 3 is a graphical representation for comparing conventional menu movement with menu movement according to the present invention;
FIG. 4 illustrates a code specifying adjustment of menu movement speed when a hand-held device is tilted in the opposite direction, according to an exemplary embodiment of the present invention;
FIG 5 is a graph illustrating an increase in a threshold when a user reverses tilting of a hand-held device forward and then backward according to an exemplary embodiment of the present invention;
FIG 6 is a graph illustrating an increase in a threshold when a hand-held device is tilted backward and then forward according to another exemplary embodiment of the present invention;
FIG 7 is a flowchart illustrating a method for moving and ceasing to move a menu according to an exemplary embodiment of the present invention; and
FIG 8 illustrates the construction of a hand-held device according to an exemplary embodiment of the present invention.

DETAILED DESCRIPTION OF THE PREFERRED EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

The present invention may, however, be embodied in many different forms and should not be construed as being limited to exemplary embodiments set forth herein. Rather, these exemplary embodiments are provided so that this disclosure will be thorough and complete and will fully convey the concept of the invention to those skilled in the art. In addition, in the drawings, the thickness of layers and regions are exaggerated for clarity.

A tilting interface for reducing a time lag due to a user's reaction time and reducing errors in a user's manipulation will now be described more fully with reference to the accompanying drawings, in which exemplary embodiments thereof are shown.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Each block of the flowchart illustrations may represent a module, segment, or portion of code, which comprises one or more executable instructions for implementing the specified logical function(s). It should also be noted that in some alternative implementations, the functions noted in the blocks may occur in a different order. For example, two blocks shown in succession may in fact be executed substantially concurrently or the blocks may sometimes be executed in the reverse order, depending upon the functionality involved.

The tilting interface for reducing a time lag due to a user's reaction time and reducing errors in a user's manipulation, which will be described hereinafter, is focused on menu navigation. However, the present invention can also be applied when the direction of a slope at which a hand-held device is tilted is used as a predetermined input signal. In one exemplary embodiment, a user can generate an input signal to control left/right movement while playing a game on a hand-held device by titling the hand-held device left or right.

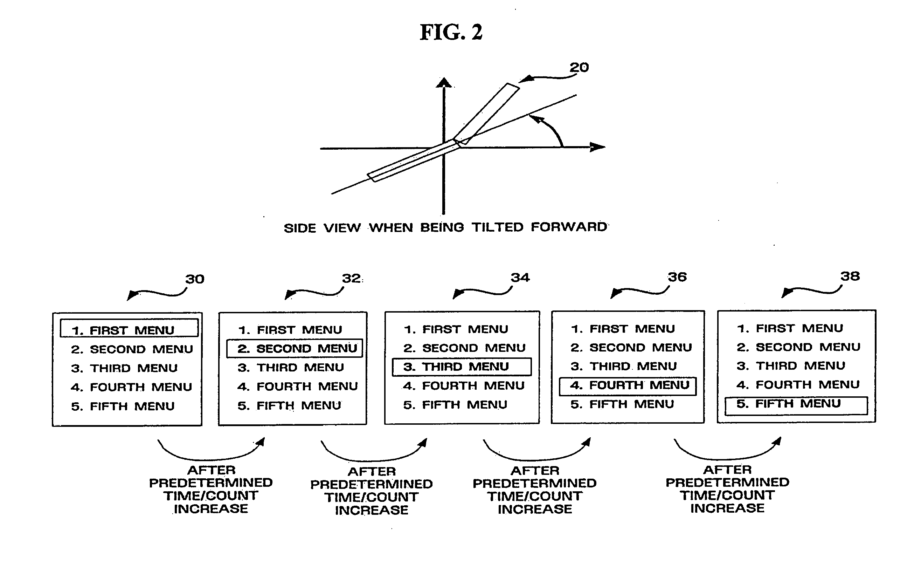

FIG. 2 illustrates the movement of menus in response to tilting, according to an exemplary embodiment of the present invention.

Referring to FIG. 2, reference numeral 20 indicates a side view of a hand-held device that a user tilts forward while he/she is holding it. When the user reverses tilting of the hand-held device forward, menus in the device are navigated as indicated by 30, 32, 34, 36, and 38. When the hand-held device is tilted forward after selection of a first menu as indicated by 30, the state 30 changes to the state 32 in which a second menu is selected after increasing a predetermined time/count. The hand-held device may remain in the state 32 or allow a user to further navigate through the menus by tilting the hand-held device further forward as indicated by 34, 36, and 38.

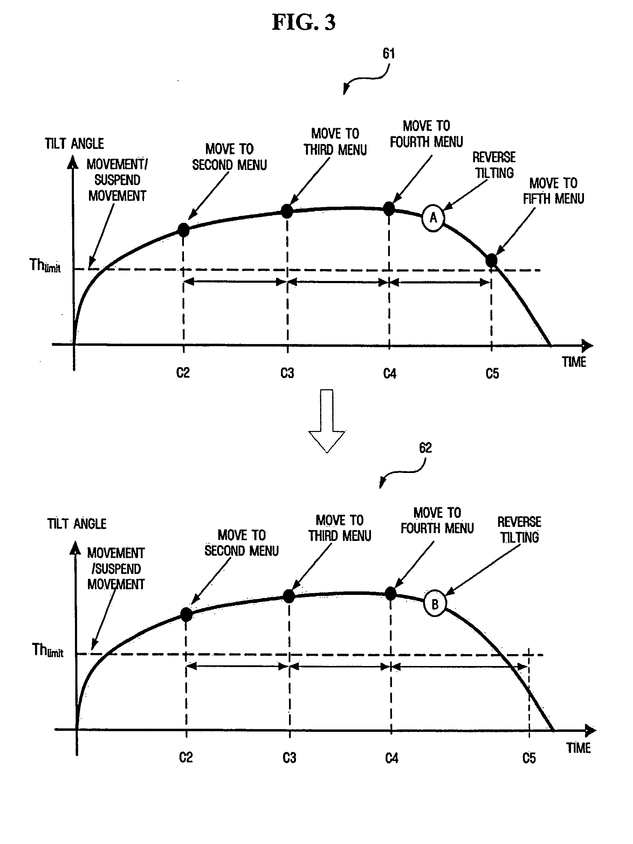

FIG 3 is a graphical representation for comparing conventional menu movement with menu movement according to the present invention. Here, the conventional menu movement is made according to a slope variation and the present invention menu movement is affected by reversed tilting. Hereinafter, the slope of the hand-held device refers to a state or an angle at which the hand-held device is tilted in a predetermined direction. Reference numeral 61 denotes a graph illustrating menu changes with respect to a slope. The ordinate and abscissa respectively denote tilt angle and time elapsed (increments of a counter). When the tilt angle exceeds a predetermined threshold $Th_{limit}$, it is sensed that a user has performed menu navigation. After a predetermined time or when the count value of an internal counter reaches a predetermined value, a first menu shifts to a second menu as indicated by 32 of FIG 2.

Meanwhile, when the hand-held device remains at the same slope or is further tilted to an angle greater than the threshold $Th_{limit}$, the second menu moves to third and fourth menus as indicated by 34 and 36 of FIG. 2.

For example, when a user desires to suspend menu navigation or to scroll down using a scroll bar by tilting the hand-held device in order to select a fourth menu, the hand-held device may be tilted in an opposite direction using a tilting interface or return to its equilibrium state. In this case, when the user reverses tilting of the hand-held device in the opposite direction as indicated by point A in the graph 61, the tilt angle decreases. However, because the tilt angle remains greater than the threshold $Th_{limit}$, the user continues to navigate to a fifth menu without cessation. As illustrated in the graph of 61, an error occurs due to an error in the user's manipulation and a time lag between when the user visually recognizes movement of the menus to when he/she controls the hand-held device. To solve this problem, the value of a factor determining menu movement when the tilting of the hand-held device is reversed can be modified. The user is able to recognize whether the tilting of the hand-held device is reversed or not based on the sign of a difference between the current and previous tilt angles. That is, the difference is changed to negative (-) after the lapse of a point C4 in time.

As illustrated in graph 62, when a user navigates through menus by titling a hand-held device, he/she moves from a first menu to a second menu at a point C2 in time. The point C2 in time may be a predetermined time or counter value.

The counter may be designed such that its count is incremented by 50 at each point C2, C3, or C4 in time. In this case, when the tilt angle is greater than the threshold $Th_{limit}$, menu movement is allowed if the counter increments its count by 50. When the user reverses the tilting of the hand-held device at point B, a counter threshold for moving to the succeeding menu may be increased. For example, the value of the factor determining menu movement may be modified such that the user can navigate to the fifth menu only after a counter value is increased by 70 between the points C4 and C5 in time. As evident from the graph 61, the user fails to suspend navigation to the succeeding menu, i.e., the fifth menu, even if the user reverses the tilting of the hand-held device in order to suspend further menu navigation. To solve this problem, as evident from the graph of 62, he/she cannot navigate to the fifth menu because the tilt angle is less than the threshold $Th_{limit}$. Of course, when the user desires to move to the fifth menu by further tilting the hand-held device, it is possible to perform menu navigation by returning the interval between menu changes to 50 when the tilt angle is greater than the threshold $Th_{limit}$.

Referring to FIG. 3, in the present invention, a factor determining menu movement according to a variation in tilt angle is modified in order to suspend menu movement. In one exemplary embodiment, a counter increase interval, which is one of the factors for determining menu movement, may be reduced as defined by the following Equation (1):

$$counter' = counter + \frac{1}{1 + |k_2 c(t)|} \quad \dots (1)$$

where c(t) is a negative slope, |a| is the absolute value of a, and $k_2$ is a constant.

As defined by the Equation (1), when the hand-held device is titled in the opposite direction, the counter increase interval is reduced. Thus, a new counter value counter' is obtained by adding the reduced counter increase interval to the original counter value. Further, because the hand-held device is not allowed to call a function for executing menu movement until the counter value reaches a specific value T, it requires time to call the function for executing the menu movement. This increases the interval between the points C4 and C5 in the graph 62 of FIG 3, thus preventing unexpected menu movement.

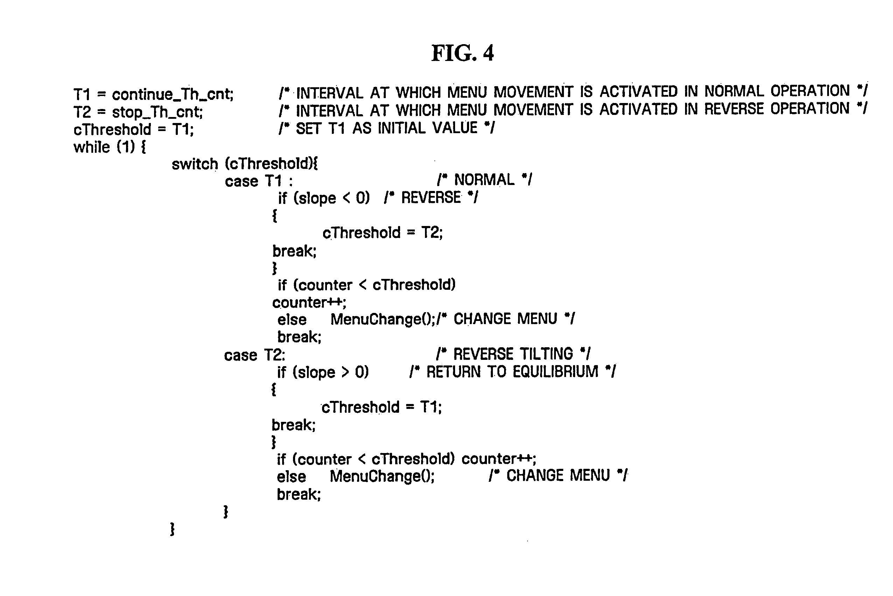

FIG 4 illustrates a code specifying adjustment of menu movement speed when a hand-held device is tilted in the opposite direction, according to an exemplary embodiment of the present invention.

Referring to FIG. 4, cThreshold for inducting menu movement is increased so that it takes a long time to move to the succeeding menu when a slope has a negative sign that means tilting in the opposite direction. Conversely, cThreshold is reduced when the slope is positive so that it takes a short time to move to the succeeding menu. The following codes illustrated in FIG. 4 specify adjustment of menu movement speed when the hand-held device is titled forward. A threshold for inducing menu movement may vary depending on the configuration of the hand-held device.

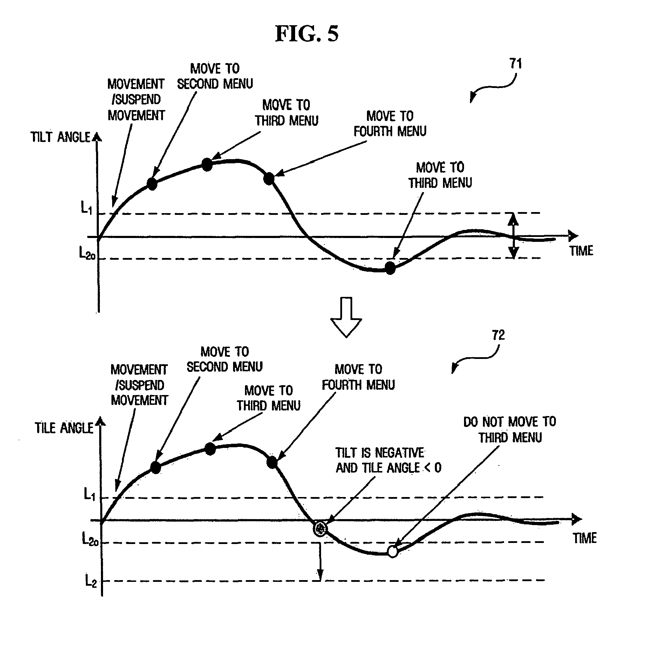

FIG 5 is a graph illustrating an increase in a threshold when a user sharply reverses tilting of a hand-held device according to an exemplary embodiment of the present invention.

Referring to a graph 71 of FIG 5, although a user reverses tilting of a hand-held device back to the equilibrium position in order to suspend menu movement when navigating to a fourth menu item, the hand-held device is temporarily tilted to an angle $L_{20}$ in the opposite direction further from the equilibrium position, thus causing the user to move to a third menu item. To solve this problem, like in a graph of 72, threshold $L_{20}$ for menu movement in the opposite direction is temporarily increased to $L_2$ while the hand-held device is returning to the equilibrium position in order to suspend menu movement. That is, unlike in the graph of 71, in the graph of 72, the user cannot navigate to the third menu item because the titling angle is less than the temporarily increased threshold $L_2$. When a variation in the tilt angle (slope) has a negative sign and the tilt angle is less than 0, the threshold is temporarily changed from $L_{20}$ to $L_2$.

The threshold $L_2$ is obtained using Equation (2):

$$L_2 = L_{20} + \text{sign}(L_{20})|kf(t)| \qquad \qquad \dots (2)$$

where f(t) is a monotone decreasing function over time, sign (a) denotes the sign of a (1 or -1), |a| is the absolute value of a, and $k_2$ is a constant.

As described above, the threshold values $L_1$ and $L_{20}$ are maintained during normal operation while the threshold value in the opposite direction is temporarily increased to $L_2$ when a user reverses tilting of the hand-held device to suspend user inputs, thus preventing unexpected movement to a succeeding menu. After the lapse of a predetermined time, the threshold value $L_2$ is returned to the original threshold $L_{20}$.

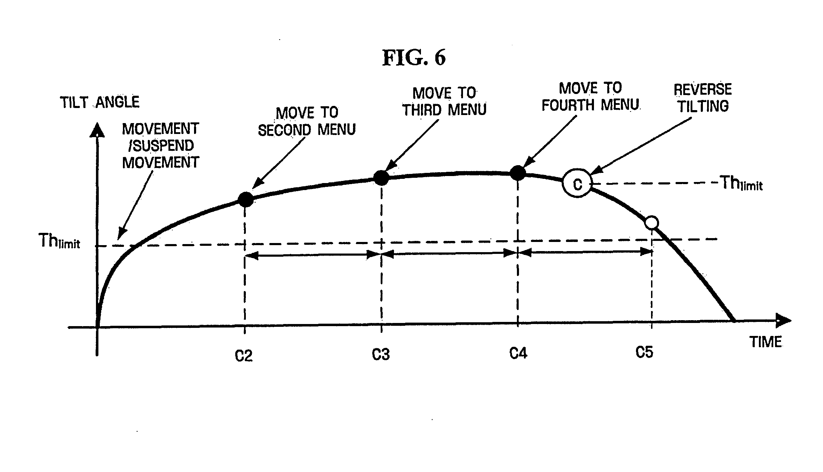

FIG 5 is a graph illustrating an increase in a threshold when a user sharply reverses tilting a hand-held device forward and then backward according to an exemplary embodiment of the present invention. When the user tilts the device backward and then forward, a value of $L_1$ may be temporarily increased. When the Equation (2) is evolved with respect to $L_1$, the temporarily increased threshold can be obtained when the user tilts the hand-held device backward and then forward in order to suspend input. This method can also be applied to the method illustrated in FIG. 3. FIG. 6 illustrates an example of a threshold increase when a hand-held device is tilted backward and then forward.

FIG. 6 is a graph illustrating an increase in a threshold when a hand-held device is tilted backward and then forward according to another exemplary embodiment of the present invention.

Referring to FIG 6, a user reverses tilting of the hand-held device to suspend movement to a fifth menu after moving to the second (point C2), third (point C3), and fourth (point C4) menus by tilting the hand-held device. A threshold $Th_{limit}$ is increased when the tilting in the opposition is sensed, thus preventing counting up to C5. Thus, the user cannot move to the fifth menu.

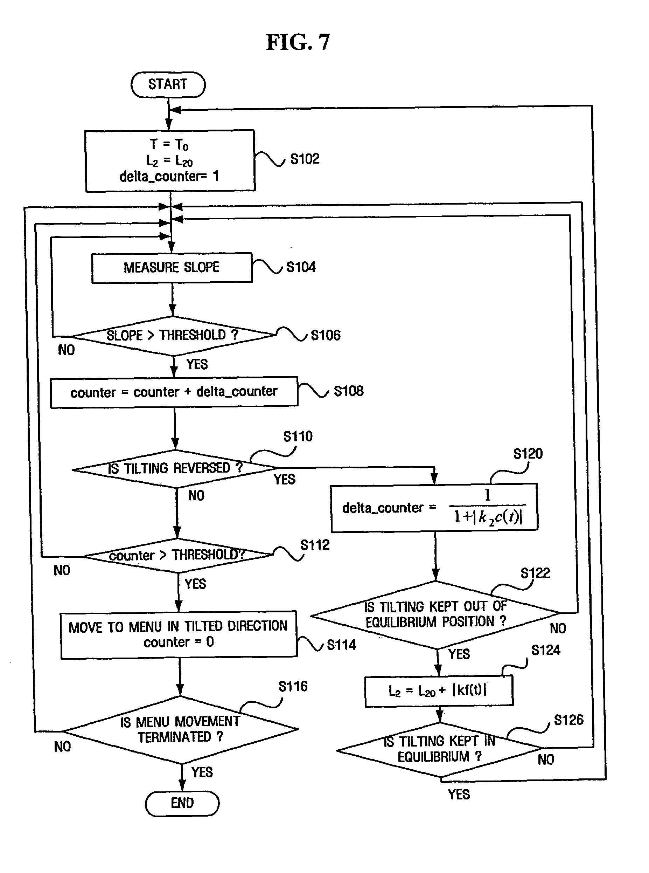

FIG 7 is a flowchart illustrating a method for moving and ceasing to move a menu according to an exemplary embodiment of the present invention. Although the flowchart of FIG. 7 illustrates a method for ceasing menu movement, it can also be applied to suspension of a repeated input performed using a tilting interface.

Referring to FIG. 7, when a user tilts the hand-held device with a tilting interface, a set-up process in step S102 is performed as follows. T is a counter threshold. That is, when the counter reaches the counter threshold T, menu movement is performed. When menu movement is not performed, a predetermined input signal is generated. For example, the user may press left or right arrow key for input while playing a game. In step S102, T and $L_2$ are set to To and $L_{20}$. $L_{20}$ is a threshold value when the hand-held device is tilted in the opposite direction in order to suspend repeated signal inputs. $L_2$ is a temporarily increased threshold as described with reference to FIG. 5. Then, delta_counter that denotes a value by which a counter is increased is set to 1.

Once the initial values have been set in step S102, a slope is measured in step S104. When the slope is greater than a threshold in step S106, an input is recognized. Alternatively, the amount of a slope variation, rather than the slope, may be measured. In step S108, when an input is recognized, a counter value is increased by delta_counter. In step S110, it is determined whether tilting of the hand-held device is reversed. When the tilting of the hand-held device is not reversed and the counter exceeds the predetermined threshold T in step S112, the user moves to a menu in the tilted direction because the counter is sufficiently increased to initialize a counter value to 0 in step S114. If menu movement is terminated in step S116, the process comes to an end. If not, the process returns to step S104 for movement to a succeeding menu. Conversely, when the counter value does not exceed the counter threshold T, step S104 is performed for continuous input.

When the user reverses tilting of the hand-held device in order to suspend menu movement in step S110, the value of a determining factor is modified so as to eliminate an error as described with reference to FIG 3 or 5. When the tilting of the hand-held device is reversed, the value of delta_counter is decreased in step S120. As the value of delta_counter decreases, the counter increment speed decreases, thus preventing occurrence of the error illustrated in the graph 61 of FIG 3.

As evident from the graph 62 of FIG. 3, this error has been eliminated by modifying the value of delta_counter. In step S122, it is determined whether the tilting of the hand-held device is kept in or out of the equilibrium position. If the tilting of the hand-held device is kept in the equilibrium position, the user reverses the hand-held device to suspend menu movement. As a result, the menu movement may be continuously performed in a direction opposite to the previous direction. To prevent this, the threshold $L_2$ for menu movement in the opposite direction is increased in step S124 as described with reference to FIG 5. When the hand-held device is returned to the equilibrium in step S126, the process returns to step S102 for new menu movement. Conversely, when the hand-held device is not kept in the equilibrium position, the process returns to step S104 in order to determine whether to perform further menu movement.

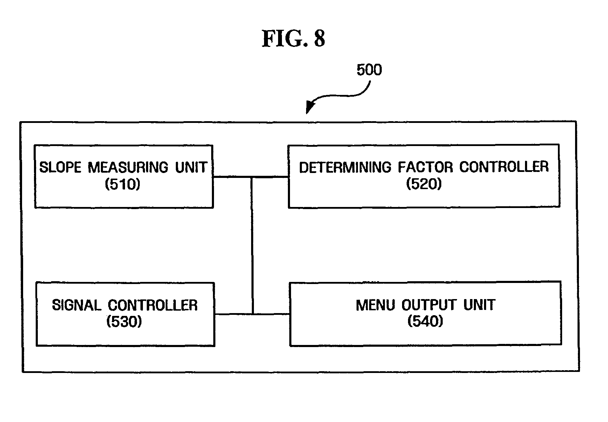

FIG 8 illustrates the construction of parts of a hand-held device 500 needed to implement a tilting interface according to an exemplary embodiment of the present invention.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, dass components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute one or more computers in a communication system.

The hand-held device 500 provides for a tilting interface and receives a predetermined signal input by being tilted. When the hand-held device continues to be tilted at a predetermined angle during menu navigation, a signal indicating navigation through menu items as illustrated in FIG 2 is generated. The menu navigation illustrated in FIG. 2 may be performed in response to a signal generated by pressing arrow keys or tilting the device using a tilting interface.

A slope measuring unit 510 consists of various sensors in order to measure the slope of the hand-held device. The number of sensors used may vary depending on the number of directions in which the hand-held device is tilted and includes a sensor measuring the slope with respect to an axis, such as a three-axis sensor.

A determining factor controller 520 calculates a slope variation measured by the slope measuring unit 5120 or a slope difference and modifies the value of a determining factor used to determine whether to generate a signal or suspend generation of the signal according to the slope variation or slope difference. For example, the determining factor may be a counter increase interval (FIG 3), $L_2$ or $L_{20}$ (FIG 5). Because the determining factor controller 520 controls factors determining whether a signal controller 530 will generate a signal or suspend generation of the signal, there may be various determining factors depending on the type of signal generating mechanism.

The signal controller 530 controls whether to generate a predetermined signal or suspend generation of signal based on the modified determining factor. A menu output unit 540 outputs the result of menu movement when menu navigation is performed using a tilting interface. In this case, a signal enables movement to a menu in a predetermined direction. The menu output unit 540 outputs the change of a menu that is made in response to the signal.

The configuration illustrated in FIG. 8 can be applied to a hand-held device enabling menu navigation or various other hand-held devices. For example, tilting a hand-held device having a game function may enable a user to control a game by generating up/down/left/right signals. Further, when a user desires to suspend generation of the signal by tilting the device in the opposite direction or returning it to the equilibrium position, the above-mentioned configuration allows the user to suspend generation of a repeated signal or a new signal due to unintentional tilting in the opposite direction, thus preventing unexpected errors. This configuration can also be used in a wide variety of applications such as cellular phones, PDAs, portable game machines, game controllers, MP3 players, and Portable Media Players (PMPs).

The present invention allows a user to control a signal in a hand-held device using a tilting interface without an error. When a signal is generated through tilting, the present invention also prevents malfunctions as a result of excessive tilting in the opposite direction for suspension of signal input. The present invention also reduces menu movement unintended by the user during menu navigation through tilting, thus improving the performance of a user interface.

In addition to the above-described exemplary embodiments, exemplary embodiments of the present invention can also be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, or DVDs), magneto-optical media (e.g., floptical disks), hardware storage devices (e.g., read only memory media, random access memory media, flash memories, etc.) and storage/transmission media such as carrier waves transmitting signals, which may include computer readable code/instructions, data files, data structures, etc. Examples of storage/transmission media may include wired and/or wireless transmission media. For example, storage/transmission media may include optical wires/lines, waveguides, and metallic wires/lines, etc. including a carrier wave transmitting signals specifying instructions, data structures, data files, etc. The medium/media may also be a distributed network, so that the computer readable code/instructions are stored/transferred and executed in a distributed fashion. The medium/media may also be the Internet. The computer readable code/instructions may be executed by one or more processors. The computer readable code/instructions may also be executed and/or embodied in an application specific integrated circuit (ASIC) or Field Programmable Gate Array (FPGA).

In addition, hardware devices may be configured to act as one or more software modules in order to perform the operations of the above-described exemplary embodiments.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

## Claims

1. A method for suspending a repeated signal input using a slope variation in a tilting interface that is used to control a predetermined signal by tilting a hand-held device, the method comprising:

   measuring a slope of the hand-held device;
   calculating a slope difference between the measured slope and previous slope;
   modifying the value of a determining factor that is used to determine whether to generate or input the predetermined signal, according to the calculated slope difference; and
   generating or inputting the predetermined signal or suspending the generating of the predetermined signal based on the modified value of the determining factor.

2. The method of claim 1, wherein the measuring of the slope is performed using a three-axis accelerometer.

3. The method of claim 3, wherein the titling interface is used for selection of a menu and the signal is used to enable movement within the menu in a predetermined direction.

4. The method of claim 1, wherein the determining factor is a counter that is configured to vary at regular intervals in proportion to the amount of time for which the hand-held device is tilted and wherein a predetermined signal is input to the hand-held device when the counter reaches a predetermined threshold, and
   wherein the modifying of the value of the determining factor comprises reducing a value by which the counter is increased when the slope variation satisfies a predetermined value.

5. The method of claim 1, wherein the determining factor is a counter controlling movement of a menu and when the counter reaches a predetermined threshold menu movement is performed, and
   wherein the modifying of the value of the determining factor comprises reducing a value by which the counter is increased when the slope variation satisfies a predetermined value.

6. The method of claim 5, wherein the reducing of the value by which the counter is increased comprises decreasing the increment speed of the counter.

7. The method of claim 1, wherein the determining factor is used as a threshold for the slope, the predetermined signal is input to the hand-held device when the slope reaches the value of the determining factor, and time required for the slope to reach the modified value of determining factor is delayed.

8. The method of claim 1, wherein the predetermined signal is used to control movement of menus, and wherein the determining factor is used as a threshold for the slope, menu movement is allowed when the slope reaches the value of the determining factor, and the menu movement is suspended by increasing an amount of time required for the slope to reach the modified value of determining factor.

9. A hand-held device using a tilting interface to input a predetermined signal by tilting the hand-held device, the hand-held device comprising:

   a slope measuring unit to measure the slope of the hand-held device;
   a determining factor controller to calculate a slope difference between the measured slope and a previous slope, and to modify the value of a determining factor that is used to determine whether to generate or to input the predetermined signal, according to the calculated slope difference; and
   a signal controller to generate or input the predetermined signal or to suspend the generating of the predetermined signal based on the modified value of the determining factor.

10. The hand-held device of claim 9, wherein the slope measuring unit uses a three-axis accelerometer to measure the slope.

11. The hand-held device of claim 9, wherein the titling interface is used for selection of a menu and the signal is used to enable movement within the menu in a predetermined direction.

12. The hand-held device of claim 9, wherein the determining factor is a counter that is configured to vary at regular intervals in proportion to the amount of time for which the hand-held device is tilted and wherein a predetermined signal is input to the hand-held device when the counter reaches a predetermined threshold, and the determining factor controller reduces a value by which the counter is increased when the slope variation satisfies a predetermined value.

13. The hand-held device of claim 9, wherein the determining factor is a counter controlling movement of a menu and when the counter reaches a predetermined threshold menu movement is performed, and the determining factor controller reduces a value by which the counter is increased when the slope variation satisfies a predetermined value.

14. The hand-held device of claim 13, wherein the determining factor controller decreases the increment speed of the counter.

15. The hand-held device of daim 9, wherein the determining factor is used as a threshold for the slope, the predetermined signal is input to the hand-held device when the slope reaches the value of the determining factor, and time required for the slope to reach the modified value of determining factor is delayed.

16. The hand-held device of claim 9, wherein the predetermined signal is used to control movement of menus, and wherein the determining factor is used as a threshold for the slope, menu movement is allowed when the slope reaches the value of the determining factor, and the menu movement is suspended by increasing an amount of time required for the slope to reach the modified value of determining factor.

17. At least one computer readable medium storing instructions that control at least one processor to perform a method for suspending a repeated signal input using a slope variation in a tilting interface that is used to control a predetermined signal by tilting a hand-held device, the method comprising:

   measuring a slope of the hand-held device;
   calculating a slope difference between the measured slope and previous slope;
   modifying the value of a determining factor that is used to determine whether to generate or input the predetermined signal, according to the calculated slope difference; and

generating or inputting the predetermined signal or suspending the generating of the predetermined signal based on the modified value of the determining factor.

18. At least one computer readable medium as recited in daim 17, wherein the measuring of the slope is performed using a three-axis accelerometer.

19. At least one computer readable medium as recited in daim 18, wherein the titling interface is used for selection of a menu and the signal is used to enable movement within the menu in a predetermined direction.

20. At least one computer readable medium as redted in claim 17, wherein the determining factor is a counter that is configured to vary at regular intervals in proportion to the amount of time for which the hand-held device is tilted and wherein a predetermined signal is input to the hand-held device when the counter reaches a predetermined threshold, and
wherein the modifying of the value of the determining factor comprises reducing a value by which the counter is increased when the slope variation satisfies a predetermined value.

21. At least one computer readable medium as recited in daim 17, wherein the determining factor is a counter controlling movement of a menu and when the counter reaches a predetermined threshold menu movement is performed, and
wherein the modifying of the value of the determining factor comprises reducing a value by which the counter is increased when the slope variation satisfies a predetermined value.

22. At least one computer readable medium as redted in daim 17, wherein the reducing of the value by which the counter is increased comprises decreasing the increment speed of the counter.

23. At least one computer readable medium as redted in daim 17, wherein the determining factor is used as a threshold for the slope, the predetermined signal is input to the hand-held device when the slope reaches the value of the determining factor, and time required for the slope to reach the modified value of determining factor is delayed.

24. At least one computer readable medium as recited in daim 17, wherein the predetermined signal is used to control movement of menus, and
wherein the determining factor is used as a threshold for the slope, menu movement is allowed when the slope reaches the value of the determining factor, and the menu movement is suspended by increasing.

## FIG. 1 (PRIOR ART)

# FIG. 2

SIDE VIEW WHEN BEING TILTED FORWARD

| 30 | 32 | 34 | 36 | 38 |
|---|---|---|---|---|
| 1. FIRST MENU | 1. FIRST MENU | 1. FIRST MENU | 1. FIRST MENU | 1. FIRST MENU |
| 2. SECOND MENU | 2. SECOND MENU | 2. SECOND MENU | 2. SECOND MENU | 2. SECOND MENU |
| 3. THIRD MENU | 3. THIRD MENU | 3. THIRD MENU | 3. THIRD MENU | 3. THIRD MENU |
| 4. FOURTH MENU | 4. FOURTH MENU | 4. FOURTH MENU | 4. FOURTH MENU | 4. FOURTH MENU |
| 5. FIFTH MENU | 5. FIFTH MENU | 5. FIFTH MENU | 5. FIFTH MENU | 5. FIFTH MENU |

AFTER PREDETERMINED TIME/COUNT INCREASE

AFTER PREDETERMINED TIME/COUNT INCREASE

AFTER PREDETERMINED TIME/COUNT INCREASE

AFTER PREDETERMINED TIME/COUNT INCREASE

EP 1 811 361 A2

# FIG. 3

61

MOVE TO
FOURTH MENU

MOVE TO
THIRD MENU

TILT ANGLE

MOVE TO
SECOND MENU

REVERSE
TILTING

MOVE TO
FIFTH MENU

MOVEMENT/
SUSPEND
MOVEMENT

A

$Th_{limit}$

C2          C3          C4          C5          TIME

62

MOVE TO
FOURTH MENU

MOVE TO
THIRD MENU

TILT ANGLE

MOVE TO
SECOND MENU

REVERSE
TILTING

MOVEMENT
/SUSPEND
MOVEMENT

B

$Th_{limit}$

C2          C3          C4          C5          TIME

12

## FIG. 4

```
T1 = continue_Th_cnt;        /* INTERVAL AT WHICH MENU MOVEMENT IS ACTIVATED IN NORMAL OPERATION */
T2 = stop_Th_cnt;            /* INTERVAL AT WHICH MENU MOVEMENT IS ACTIVATED IN REVERSE OPERATION */
cThreshold = T1;             /* SET T1 AS INITIAL VALUE */
while (1) {
            switch (cThreshold){
                    case T1 :                      /* NORMAL */
                       if (slope < 0)  /* REVERSE */
                       {
                              cThreshold = T2;
                       break;
                       }
                       if (counter < cThreshold)
                       counter++;
                       else    MenuChange();/* CHANGE MENU */
                       break;
                    case T2:                       /* REVERSE TILTING */
                       if (slope > 0)      /* RETURN TO EQUILIBRIUM */
                       {
                              cThreshold = T1;
                       break;
                       }
                       if (counter < cThreshold) counter++;
                       else    MenuChange();       /* CHANGE MENU */
                       break;
            }
}
```

# FIG. 5

MOVE TO
SECOND MENU

MOVEMENT
/SUSPEND
MOVEMENT

MOVE TO
THIRD MENU

MOVE TO
FOURTH MENU

MOVE TO
THIRD MENU

71

TILT ANGLE

$L_1$

$L_{2o}$

TIME

MOVE TO
SECOND MENU

MOVEMENT
/SUSPEND
MOVEMENT

MOVE TO
THIRD MENU

MOVE TO
FOURTH MENU

72

DO NOT MOVE TO
THIRD MENU

TILE ANGLE

TILT IS NEGATIVE
AND TILE ANGLE < 0

$L_1$

$L_{2o}$

TIME

$L_2$

14

FIG. 6

# FIG. 7

START

$T = T_0$
$L_2 = L_{20}$
delta_counter= 1 — S102

MEASURE SLOPE — S104

SLOPE > THRESHOLD ? — S106
NO / YES

counter = counter + delta_counter — S108

IS TILTING REVERSED ? — S110
YES / NO

S120
delta_counter = $\dfrac{1}{1+|k_2 c(t)|}$

counter > THRESHOLD? — S112
NO / YES

IS TILTING KEPT OUT OF EQUILIBRIUM POSITION ? — S122
YES / NO

MOVE TO MENU IN TILTED DIRECTION
counter = 0 — S114

$L_2 = L_{20} + |kf(t)|$ — S124

IS MENU MOVEMENT TERMINATED ? — S116
NO / YES

IS TILTING KEPT IN EQUILIBRIUM ? — S126
YES / NO

END

# FIG. 8

500

| SLOPE MEASURING UNIT (510) | | DETERMINING FACTOR CONTROLLER (520) |
| SIGNAL CONTROLLER (530) | | MENU OUTPUT UNIT (540) |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050132051